# EUROPEAN PATENT APPLICATION

(11) **EP 1 253 547 A2**
(43) Date of publication of application: **30.10.2002**
(21) Application number: 01125001.6
(22) Date of filing: 19.10.2001
(51) Int. Cl.: G06K 11/18

(54) **A wireless pen-type input device for computers**

(30) Priority: 25.04.2001 US 843423
(71) Applicant: Xybernaut Corporation, Fairfax, Virginia 22033 (US)
(72) Inventor: Jenkins, Michael D., Burke, VA 22015 (US); Mancini, Phillip D., Fairfax, VA 22033 (US)
(74) Representative: Borchert, Uwe Rudolf, Dipl.-Ing.

(57) **Abstract**

The invention is a modular pen-type speech input device for use with personal computers, palm top computers, personal digital assistants, wearable computers, desktop computers or other general purpose computers. The invention consists essentially of a pen shaped device with integral microphone, rechargeable power supply, wireless transmitter and a plurality of function modules. These modules can be selectively removed or added depending on the desired function set of the user.

## Description

The present invention relates to a wireless pen-type input device for computers according to the features of claim 1.

This application is a continuation-in-part of co-pending U.S. patent application 09/461,870 filed on December 15, 1999 entitled "Mobile Computer with Audio Interrupt System" which is a continuation-in-part of U.S. patent application 09/160,849 filed on September 25, 1998 and also entitled "Mobile Computer with Audio Interrupt System" both of which are hereby incorporated by reference into the present disclosure.

The invention is essentially a pen-type input device for computers which allows user to input commands using both voice and manual controls integral to the pen device. Optionally, the pen device will serve as a writing instrument.

The current trend in the computer industry is to optimize the user's interface with the computer. Various ergonomic and efficient products have emerged to liberate users from the typical fixed, wired environment they have been accustomed to. Particular innovations have been made in the field of input devices. Wireless mice, headsets, keyboards, modems and pen tablets, etc. now allow users to input and interface with their PC in a un-tethered or quasi-tethered manner. This has made it possible for PC users to enjoy a more comfortable experience when using their PC's.

Traditionally, PC users have utilized the tethered computer mouse for activating commands and effecting nontextual input. Today various unwired mouse products are available which permit users to work partially or completely unwired from their computer. Typically, they utilize IR or RF communication if wireless, or use a wired pad which can be "written" on by a wireless pen or stylus. Human speech has also emerged as a popular and convenient method of activating PC's. Various software programs and operating systems are compatible with speech control. IBM Corporation manufactures and markets a commercial speech program under the name VIAVOICE, while L&H Corporation manufactures and markets a similar program under the name NATURALLY SPEAKING. These programs utilize a combination of microphone, sound card, software an the CPU to process verbal commands and even speech dictation (speech to text).

Diamond Multimedia Corporation manufactures and markets a pointing device called the Gyromouse. The Gyromouse is an egg-shaped pointing device which can work in a desktop or airborne mode. When on the desktop, the mouse moves via rotating ball located on the under side of the mouse, consistent with roller ball type desktop mice. However, the user may selectively switch the device into the air mode whereby an internal gyroscope detects changes in the mouse's position. These changes are converted to electrical signals and transmitted by an internal RF transmitter to a receiver at the PC.
The mouse case itself also possesses left and right click mouse buttons so that it will operate in a manner familiar to the user. A shortcoming of the Gyromouse is that it is large and awkward to carry. It can not easily be carried in the pocket of a user or discretely attached to his clothing. Additionally, the device lacks any other utility than as a pointing device, except perhaps as a paper weight.

Wacom Corporation manufactures a wireless pen and mouse combination commercially labeled the Graphire wireless pen and mouse. This device consists of a pressure sensitive pad which sits on a desktop and is wired to a port on a PC. On the pad is a receptacle holding a pen input device and a mouse which sits on the pad. Either device can be used on the pad. The pen device is shaped like a pen but does not have a transmitter or power supply it merely activates pressure points on the pad to effect input. CIC manufactures a similar product known as the Handwriter Manta which is capable of reading handwriting "written" on the pad by the pen-type device. A shortcoming of this device is that the pen and mouse will only work with the special wired mouse pad.

U.S. patent 4,814,552 teaches an acoustic surface/tablet and handheld stylus for PC activation. The device consists of a tablet surface with several acoustic sensors. Under normal operation a user moves the stylus on the pad. The stylus itself transmits an IR signal and an ultrasound pulse. The sensors on the tablet are able to use triangulation to determine a location of the stylus. This information is then conveyed to the computer. This suffers from the fact that a special purpose tablet is required which adds another piece of bulky equipment to the desktop environment of the user.

U.S. patent 5,945,981 teaches a wireless pen-type computer input system. The pen device itself includes a LED, at least one switch, a rechargeable battery, and a control circuit. The system also uses a wired work surface or tablet with an optical receiver. The receiver detects the optical output of the LED and transmits this information as position to the PC. The pen device also incorporates a pressure sensitive tip for effecting different levels of saturation. However, this invention suffers from the same limitation as the above mentioned U.S. patent 4,814,552 in that it requires an additional piece of external hardware. Furthermore, the pen device can only be used when in contact with the tablet/sensor surface.

U.S. patent 5,894,119 teaches a pen device with a bar code scanner in the tip. The pen device has a connection port on the top of it for receiving a headphone jack. The device also possesses an integral power supply and RF transceiver. Users of the device can scan a bar code on CD label and a music sample of the contents of the CD are automatically transmitted wirelessly to the pen device and output over the headphones. This device does not serve as an activation device for PC's.

U.S. patent 5,671,158 discloses a wireless headset with a display and microphone. The headset communicates wirelessly with a nearby computer to affect control of the computer. Various information can be input and commands issued by the voice of the person wearing the headset. However, the device requires the user to wear a bulky headset and is directed to a different field of endeavor.

WIPO Documents WO 00101670 and WO 00073981, commonly assigned to Anoto Corporation of Sweden, disclose a character recognition system which is based on a pen-type input device and writing paper with a proprietary micro pattern inked into it. The pen-type device contains a Bluetooth transmitter, a microprocessor, memory, ink, and a camera. As the pen writes over the paper, the camera records the motion via the micro pattern on the paper. This information is then transmitted to any Bluetooth enabled device. This affords input of text and conversion of handwriting to text. However, the invention disclosed in these documents does not work when not utilized on the special writing paper. Additionally, the invention does not provide for speech based control of a Bluetooth enabled device. Furthermore, the inclusion of the camera next to the writing tip of the pen disturbs the symmetry of the pen, making it awkward to hold and write with.

The Bluetooth protocol has opened the door for the possibility of a wide variety of wireless devices. Bluetooth is a digital wireless protocol which enables computers, communication devices and other narrow to mid bandwidth devices to communicate without wires over short distances. Bluetooth modules capable of receiving signals from any Bluetooth enabled peripheral are now being built into OEM PC's such as those manufactured by Compaq Corporation of Houston, TX, USA. These modules are operable to communicate with a wide variety of Bluetooth enabled devices. Devices such as keyboards, mice, headsets, mobile phones, and even digital cameras will all become Bluetooth enabled devices.

Thus, there exists a need for a Bluetooth enabled input device which is devoid of the aforementioned shortcomings.

It is, therefore, an object of this invention to provide an activation device for personal computers which is devoid of the aforementioned limitations.

It is an additional object of this invention to provide a novel activation device for personal computers.

It is also an object of this invention to provide a wireless activation device for any Bluetooth enabled device.

It is another object of this invention to provide a wireless activation device for personal computers.

It is yet another object of this invention to provide a combination writing pen and activation device.

It is a further object of this invention to provide a wireless pen-based activation device which accepts voice commands.

It is still a further object of this invention to provide a wireless pen-based activation device which communicates to a computer using the Bluetooth protocol.

It is an additional object of this invention to provide a wireless pen-based activation device for a computer which can be used on any flat surface.

These and additional objects of the present invention are accomplished generally by a wireless pen-based activation device for computers.

In a preferred embodiment, the present invention is formed into the shape of a pen. At the writing end of the pen is the tip of an ink cartridge or other refillable or replaceable ink dispensing product. The tip of the pen fuselage contains a removable shroud that permits access to the ink so that it can be replaced when the supply of ink has been exhausted. The opposing end of the pen device contains a small microphone. There is a clip on the outside of the fuselage of the pen device so that the device may be easily clipped onto the shirt pocket of a user. Internal to the device is a rechargeable power supply, a control circuit, a Bluetooth transmitter, and a digital signal processor or like signal processing chip. In this preferred embodiment the pen-type input device will be used to assert control of a personal computer. However, other embodiments are contemplated wherein the device can be used to assert control of any electronic device utilizing a Bluetooth receiver. Such devices include appliances, video cameras, photographic cameras, etc. Preferably, at least one activation button will sit on the outside of the pen device so that a user may hold the pen in his hand and click to effect at least a left mouse click. Ideally, at least one additional button will exist allowing a right mouse click or programmable commands or command sequences.

Through use of the present invention, a user will be able to at least partially control a computer or operating system of a computer or software running on a computer through the use of speech, and/or speech combination with manual controls on the pen-type input device in a wireless manner. This can include functions such as powering the computer on and off, logging into the computer, opening and closing programs and navigating through programs.

A digital signal processor is a general purpose microprocessor which consumes very low power relative to traditional CPU's and whose architecture is optimized for performing mathematical calculations and filtertype algorithms. The disclosure of co-pending U.S. application 09/677,569, entitled, "Computer Motherboard Architecture with Integrated DSP," is hereby incorporated by reference. This will permit efficient processing of speech by the pen-type into commands so that only the commands will be transmitted to the computer, not requiring the computer to have voice recognition software. Alternatively, the pen will simply digitize and clean the signal and produce a digital signal representative of the spoken words to be transmitted to the computer where it will be interpreted by software and the CPU.

In another embodiment, the present invention will replace the ink pen tip with a roller ball which is capable of capturing x-y coordinate data in a manner analogous to a desk top mouse. This will permit a user to roll the pen on any flat surface and affect mouse control without needing a special pressure or light sensitive mouse pad. This x-y coordinate information will be transmitted by the pen's transmitter to a receiving module on the computer which will move the cursor accordingly. Alternatively, this roller ball could be replaced with an eraser style mouse pointer such as is used on laptop devices.

In yet another embodiment, the present invention will have a laser pointing device in the tip portion of the device which upon activation will cause a stream of laser light to be emitted in direction defined by the axis of the pen device. Preferably, a pressure switch will reside on the tip portion consistent with laser pointing devices known in the art. The laser will be used identically to currently available laser devices such as to draw attention to certain elements when making a presentation, while the control buttons and/or the microphone can be used to drive the presentation.

The present invention will accommodate each embodiment by employing a core which consists of the fixed nonredundant components and a plurality of specific purpose modules, said modules including the writing pen module, the roller ball module, and the laser pointer module. These fixed components may include the internal electronics, command buffer memory, power supply, fuselage of the pen, microphone, DSP chip, Bluetooth transmitter, control chip and activation buttons.

In another related embodiment the upper portion of the pen will possess a small LED or like display screen to display to the user in graphical, textual, or icon based format the current active function set of the pen-type input device. Preferably, this screen will reside on a surface of the pen opposite to the pocket clip so as to protect the screen from damage or abrasion.

In another related embodiment, there is a programmable button on the pen-type input device which allows the user, with the assistance of a computer and software, to assign a specific command or sequence of commands to the button. Alternatively, voice commands received by the microphone can be customized using the same computer and software to affect a command or sequence of commands.

In another embodiment, a plurality of the pen-type input devices can be used simultaneously to effect a plurality of virtual desktops. For instance, in a collaborative group working environment, where a plurality of persons are present with one or more pen-type input devices of the present invention, a person can assert control of the presentation or their virtual version of the presentation by activating their input device.
They could then pull up the document which is relevant to their particular question or input in the discussion. Control could then revert back to the group leader by activation of his pen-type input device.

Additional advantages and characteristics result from the following description of several embodiments of the invention in connection with the drawings. In the drawings are shown:
- Fig. 1: illustrates a plan view of an embodiment of the present invention;
- Fig. 2: illustrates a plan view of the lower portion of the pen embodiment of the present invention;
- Fig. 3: illustrates a plan view of the lower portion of the roller ball embodiment of the present invention;
- Fig. 4: illustrates an expanded plan view of the roller ball embodiment of the present invention;
- Fig. 5: illustrates a plan view of the lower portion of the laser pointer embodiment of the present invention;
- Fig. 6: illustrates a close up plan view of the top end of an embodiment of the device of the present invention;
- Fig. 7: illustrates an exemplary circuit diagram of the internal electrical components of an embodiment of the present invention; and
- Fig. 8: illustrates a plan view of an LED screen embodiment of the present invention.

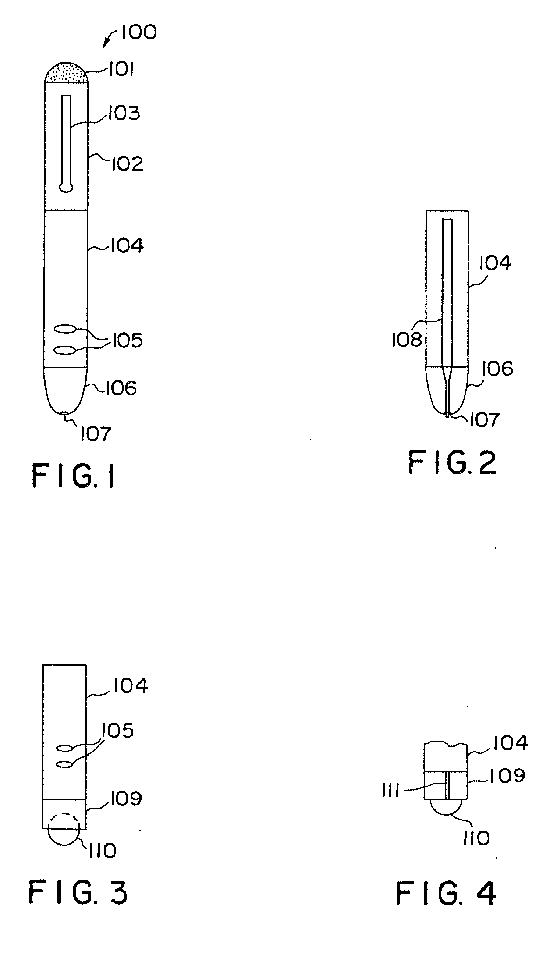

Specific discussion of the present invention will now be made with respect to the drawing figures. Fig. 1 illustrates an exemplary embodiment of the present invention. It is essentially a pen-type input device for use with personal computers. By "pen shaped" or "pen-type" casing is meant throughout this disclosure and claims a shape similar to a conventional pen as shown in the drawings. For the purposes of this disclosure and claims, personal computers will be taken to include personal digital assistants, palm top computers, hand held computers, desktop computers, or any other general purpose computer. The device is comprised essentially of fixed and variable components. Fig. 1 illustrates a basic embodiment of the present invention, the pen-type input device 100. Components include a microphone 101, a combination antenna/pocket clip 103, and a two part fuselage comprising top portion 102 and bottom portion 104. Additionally, there is shroud 106 with opening 107 and one or more activation buttons 105. Preferably, the fuselage consisting of top portion 102, bottom portion 104, and shroud 106 are composed of a scratch and dent resistant material such as titanium, carbon steel, or other hard metal and are finished to effect an aesthetic pleasing look, such that when in the pocket of a user it will appear to be a high quality pen such as those known in the art and manufactured by companies such as Waterman Corporation, Parker Corporation, and Mont Blanc Corporation to name a few. The one or more buttons 105 on the lower portion 104 are to affect mouse clicks in a manner analogous to a desktop mouse.

The microphone 101 in the upper portion 102 should ideally possess a dent resistant grille to protect the actual microphone from damage by contact.

Fig. 2 illustrates one specific embodiment of the present invention wherein the lower portion 104 is operable to accept a replaceable ink pen cartridge 108. In this manner, the pen-type input device 100 of the present invention can be utilized as an actual writing pen when not in use as a computer input device or in combination thereof. The shroud 106 will preferably be removable by twisting it on a pair of matching threads so that it may be removed and a replacement ink cartridge 108 can be inserted. When the ink cartridge is in the retracted position, it will not protrude beyond the surface of the shroud 106. However, through one of various well known activation means, including twisting the lower portion 104, twisting the shroud 106, clicking the clip 103, or another activation means, the ink cartridge 108 may be selectively engaged for use as a writing tool. The other components of the lower portion 104 including activation button or buttons 105 will be unaffected by the presence or absence of the ink cartridge 108.

Fig. 3 illustrates an alternative embodiment wherein the ink cartridge 108 of Fig. 2 is replaced by a roller ball 110. A different shroud 109 will attach to the lower portion 104 using either a friction-based attachment means, threaded attachment means, or combination thereof. Perpendicular roller will be housed within the shroud 109 to restrain the roller ball 110 and to provide X-Y coordinate information to the pen device. The activation or mouse buttons 105 will be unaffected by either the presence or absence of the roller ball 110 and shroud 109. Fig. 4 further refines this embodiment illustrating a colored or raised indicator 111 indicating to the user which direction in X-Y space is up. This will enable a user to effectively use the device as a mouse device knowing generally which direction will move the cursor upwards on the plane of the display screen of the computer device he is communicating with.

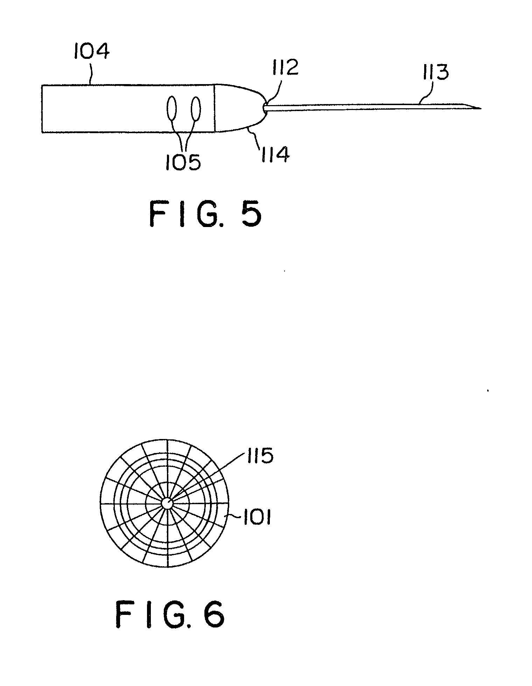

Fig. 5 illustrates yet an additional embodiment of the pen-type input device 100 of the present invention which includes a laser pointing device 112 in the lower portion 104 of the pen-type input device 100. The laser pointer component 112 will simply slide into lower portion and will remain secured by the shroud 114. Preferably, the shroud 114 will possess a button or sensor which when touched by the finger of a user will activate the laser device 112. This will cause a laser beam 113 to emanate from the pen-type input device 100 in a direction parallel to the plane defined by the fuselage of the pen-type device 100. It may be desirable for the laser pointing device component to contain its own integral power supply. Alternatively, a single power supply may be utilized by all components of the pen-type input device 100.

Fig. 6 illustrates a close up of the microphone 101 which appears at the top of the upper portion 103 of the pen-type input device 100. The microphone may have an LED 115 in the center to indicate when the microphone is on and enabled. Turning the microphone on and off can be affected by a pressure switch located under the microphone, such that when pressure is applied to the wire cage covering the microphone it alternatively turns on and off. Optionally, the microphone could be activated by depressing one of the activation buttons 105 on the lower portion 104 of the pen-type input device.

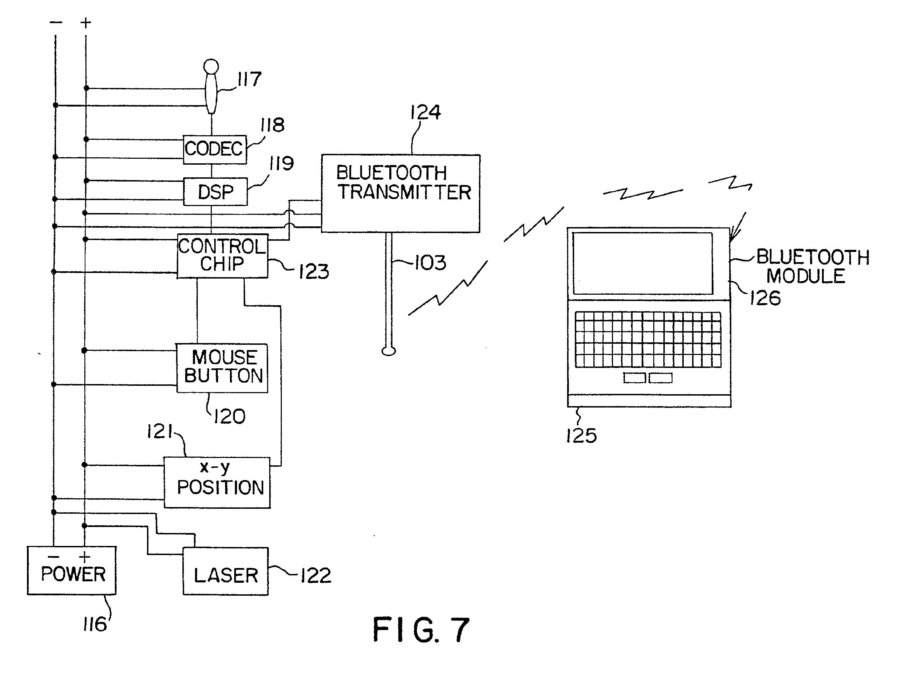

Fig. 7 illustrates an overview of the basic internal electrical components of the pen-type input device. Essentially, there is a power bus created by a rechargeable power supply 116. The power supply 116 feeds power to all electrical components including the microphone, a CODEC chip 118 for analog to digital conversion of audio signals, a DSP chip 119, the activation buttons 120, the x-y position sensors 121 related to the roller ball 110, and the Bluetooth transmitter 124. While this application specifically discloses the Bluetooth protocol, one of ordinary skill in the art will understand and appreciate that any other efficient wireless protocol may be utilized without departing in spirit or scope from the present invention. Preferably, the power supply 116 will be a rechargeable lithium ion battery, however, one of ordinary skill in the art will understand and appreciate that the battery may be a NiCd, NMHd, Lithium Ion, fuel cell, or other type of currently available or future rechargeable power supply. Preferably, the activation buttons 120 and x-y position sensors and control chip will remain in the powered state so that they may utilized on demand. However, it may also be desirable to have a master control switch which can selectively disable all electrical components in the interest of saving power. When an activation button is depressed this information is sent to the control chip 123 which then hands it to the Bluetooth transmitter 124 to be transmitted to a complementary Bluetooth module 126 on a computer 125 which is not tethered to the pen-type input device 100. A similar process occurs when a roller ball 110 movement is detected whereby this coordinate information is passed on to the control chip 123 and then the Bluetooth transmitter 124 and then transmitted to the computer 125 to effect a cursor movement on the screen.

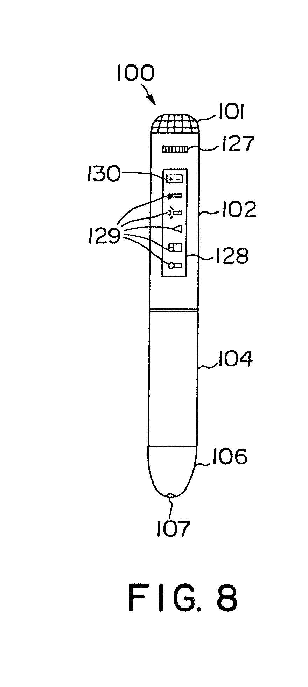

Fig. 8 illustrates an alternative embodiment of the pen-type input device 100 in which an LED screen 128 sits on the face of the upper portion 102 which may be positioned 180 degrees opposite to the pocket clip 103. The LED screen 128 may display function icons 129 which illuminate depending upon which attached components are active. For purpose of example, icons 129 representing a microphone, mouse, ink, transmitter, and laser are shown. Also, it may be advantageous to include a battery icon 130 representative of the power supply or amount of remaining power supply. Alternatively, the icons may be replaced by text or other symbolic representations. Also shown is a master power switch 130 which selectively enables or disables all powered components of the pen-type input device 100.

When a user desires to use the device 100 in a voice command mode, he or she activates the microphone 117 through one of a plurality of means, and speaks his command such as "open mail". This audio command will be digitized by the CODEC 118 and passed to the DSP 119. The DSP can perform a variety of algorithms on the command to remove noise, match with stored commands or otherwise optimize. Then either a raw digital bit stream or a complete command are passed to the control chip and then the Bluetooth transmitter. When the command is reached at the computer 125, the command will be effected, opening the user's e-mail client, if that is the desired command. Using a combination of the pen-type input device and software running on the computer 125 various macro commands could be created to create a nearly infinite number of command sequences merely by uttering a single word. Alternatively, libraries will be available for the pen to work with specific applications such as the Microsoft Office Suite of applications or a specific web browser or operating system.

Referring again to Fig. 7, all commands derived from the pen, either voice or otherwise, are buffered and formatted by the control chip 123 and then passed to the Bluetooth transmitter 124 which is discretely housed within the upper portion 102 of the pen-type input device 100. This transmitter communicates with a Bluetooth module on a laptop, palmtop, desktop or other style computer. PCMCIA type Bluetooth modules are at present commercially available. Furthermore, computer manufacturers are now making Bluetooth modules integral to their computers so that a plurality of third party Bluetooth-type device can be utilized with their computer systems.

The preferred and optimally preferred embodiments of the present invention have been described herein to illustrate the underlying principles of the invention, but it is to be understood that numerous modifications, designs, and alterations may be made without departing from the spirit and scope of this invention.

### List of Reference Signs

- 100: input device
- 101: microphone
- 102: top portion
- 103: antenna/pocket clip
- 104: bottom portion
- 105: activation button
- 106: shroud
- 107: opening
- 108: ink cartridge
- 109: shroud
- 110: roller ball
- 111: indicator
- 112: laser pointing device
- 113: laser beam
- 114: shroud
- 115: LED
- 116: power supply
- 117: microphone
- 118: CODEC chip
- 119: DSP chip
- 120: activation buttons
- 121: position sensors
- 123: control chip
- 124: transmitter
- 125: computer
- 126: module
- 128: LED screen
- 129: function icons
- 130: battery icon / power switch

## Claims

1. A wireless pen-type input device for computers, the device comprising:
a pen shaped housing;
a microphone;
an audio processing circuitry;
a power means;
means for attachment to a user;
a wireless transmitter;
at least one removable function module.

2. A wireless pen-type input device according to claim 1, **characterized in that** said power means are formed as a power supply and/or a rechargeable power source, e. g. such as a battery.

3. A wireless pen-type input device according to claim 1 or 2, **characterized in that** said computer is a personal computer.

4. A wireless pen-type input device according to any one of the preceding claims, **characterized in that** said means for attachment to a user is formed as a pocket clip.

5. A wireless pen-type input device according to claim 4, **characterized in that** said pocket clip also functions as an antenna for said transmitter.

6. A wireless pen-type input device according to any one of the preceding claims, **characterized in that** said audio processing circuitry is formed as a speech processing circuitry.

7. A wireless pen-type input device according to any one of the preceding claims, **characterized in that** said wireless transmitter is housed within said housing and is operable to communicate with a wireless receiver attached or integral to a separate electronic device.

8. A wireless pen-type input device according to claim 7, **characterized in that** said separate electronic device is a separate computer device.

9. A wireless pen-type input device according to claim 7 or 8, **characterized in that** said wireless transmitter is a Bluetooth transmitter and said wireless receiver is a Bluetooth module.

10. A wireless pen-type input device according to any one of the preceding claims, **characterized in that** said function module is a module selected from the group consisting of an ink pen module, a lead pencil module, a laser pointer module, and a roller ball type mouse module.

11. A wireless pen-type input device according to any one of the preceding claims, **characterized in that** said audio processing circuitry includes an analog to digital converter.

12. A wireless pen-type input device according to any one of the preceding claims, **characterized in that** said audio processing circuitry further includes a digital signal processor.

13. A wireless pen-type input device according to any one of the preceding claims, **characterized in that** said audio processing circuitry includes a command buffer memory.

14. A wireless pen-type input device according to any one of the preceding claims, **characterized in that** said removable function module is a writing instrument module.

15. A wireless pen-type input device according to any one of the preceding claims, **characterized in that** said module is a roller ball type point device module.

16. A wireless pen-type input device according to any one of the preceding claims, **characterized in that** said module is a laser pointer module.

17. A wireless pen-type input device according to any one of the preceding claims, **characterized in that** said computer device is operable to receive input from a plurality of wireless pen-type input devices simultaneously.

18. A wireless pen-type input device according to any one of the preceding claims, **characterized in that** said function module is a module selected from the group consisting of an ink pen module, a lead pencil module, a laser pointer module, and a roller ball type mouse module.
